# EUROPEAN PATENT APPLICATION

(11) **EP 4 625 591 A2**
(43) Date of publication of application: **01.10.2025**
(21) Application number: 23896763.2
(22) Date of filing: 28.11.2023
(51) Int. Cl.: H01M 10/058

(54) **DEVICE FOR MEASURING PRESSURE ON ELECTRODE CORE WHEN LOADED INTO CASING, AND APPARATUS FOR LOADING ELECTRODE CORE INTO CASING**

(30) Priority: 28.11.2022 CN 202223162569 U
(71) Applicant: BYD Company Limited, Shenzhen, Guangdong 518118 (CN)
(72) Inventor: CHEN, Yuchun, Shenzhen, Guangdong 518118 (CN); LI, Wei, Shenzhen, Guangdong 518118 (CN); ZHU, Yanrong, Shenzhen, Guangdong 518118 (CN); LIU, Jun, Shenzhen, Guangdong 518118 (CN); ZHANG, Yong, Shenzhen, Guangdong 518118 (CN)
(74) Representative: Taor, Simon Edward William
(86) International application number: PCT/CN2023/134609
(87) International publication number: WO 2024/114614

(57) **Abstract**

An apparatus for loading an electrode core into a casing, the apparatus comprising a device for measuring the pressure on an electrode core when loaded into a casing. The device for measuring the pressure on an electrode core when loaded into a casing comprises a gripping mechanism, a first pushing mechanism and a pressure measurement mechanism. The gripping mechanism comprises a first driving member and a gripper, wherein the first driving member is used for driving the gripper to grip an electrode core. The first pushing mechanism is configured to move in a first direction and push the electrode core into a casing. The pressure measurement mechanism is connected to the gripping mechanism and is used for measuring the resistance to the electrode core while the electrode core is pushed into the casing.

## Description

### CROSS-REFERENCE TO RELATED APPLICATIONS

The present disclosure claims priority to Chinese Patent Application No. 202223162569.7, filed on November 28, 2022 and entitled "DEVICE FOR MEASURING PRESSURE ON ELECTRODE CORE WHEN LOADED INTO CASING, AND APPARATUS FOR LOADING ELECTRODE CORE INTO CASING". The entire content of the above-referenced application is incorporated herein by reference.

### FIELD

The present disclosure relates to the technical field of batteries, and more specifically, to a device for measuring a pressure on an electrode core when loaded into a casing and an apparatus for loading an electrode core into a casing.

### BACKGROUND

With the development of science and technology, various new energy technologies continuously emerge. A lithium battery becomes an indispensable part of smartphones, electric vehicles, and the like. During production of the lithium battery, a finished electrode core needs to be inserted into a casing. However, due to a relatively small gap between the electrode core and the casing and relatively high coaxiality thereof, interference or friction easily occurs during insertion of the electrode core.

In the related art, an electrode core is mainly rigidly loaded into a casing after the casing is fixed. However, when the electrode core interferes with the casing or an insulating film, the insulating film is damaged, or even the electrode core is damaged.

### SUMMARY

The present disclosure is intended to resolve at least one of technical problems existing in the related art. Therefore, the present disclosure provides a device for measuring a pressure on an electrode core when loaded into a casing. A gripping mechanism stably grips the electrode core, so that the electrode core can be stably loaded into the casing. A pressure measurement mechanism measures a force experienced by the electrode core, to prevent further damage to the electrode core during the loading into the casing. Monitoring the pressure on the electrode core during the loading into the casing avoids a reject rate of loading of electrode cores into casings to a large extent.

The present disclosure further provides an apparatus for loading an electrode core into a casing.

A device for measuring a pressure on an electrode core when loaded into a casing in an embodiment of a first aspect of the present disclosure includes a gripping mechanism, a first pushing mechanism, and a pressure measurement mechanism. The gripping mechanism includes a first driving member and a gripper. The first driving member is drive-connected with the gripper. The first driving member is configured to drive the gripper to grip an electrode core. The first pushing mechanism is arranged below the gripping mechanism. The first pushing mechanism is configured to move in a first direction and push the electrode core into a casing. The pressure measurement mechanism is connected with the gripping mechanism and is configured to measure a resistance to the electrode core during the pushing into the casing.

In the device for measuring a pressure on an electrode core when loaded into a casing in this embodiment of the present disclosure, the gripping mechanism stably grips the electrode core, so that the electrode core can be stably loaded into the casing. The pressure measurement mechanism measures a force experienced by the electrode core, to prevent further damage to the electrode core during the loading into the casing. Monitoring the pressure on the electrode core during the loading into the casing avoids a reject rate of loading of electrode cores into casings to a large extent.

According to some embodiments of the present disclosure, the device for measuring a pressure on an electrode core when loaded into a casing further includes a mounting plate. The mounting plate is fixed above the first pushing mechanism. One end of the pressure measurement mechanism is fixedly connected with the mounting plate. Another end thereof abuts against the gripping mechanism.

According to some embodiments of the present disclosure, the device for measuring a pressure on an electrode core when loaded into a casing further includes a drive plate. The drive plate is sandwiched between the mounting plate and the gripping mechanism. One end of the pressure measurement mechanism abuts against the drive plate.

According to some embodiments of the present disclosure, the pressure measurement mechanism includes a body and a measurement terminal. The measurement terminal protrudes relative to the body and is movable relative to the body. The drive plate is provided with a through hole. The measurement terminal extends through the through hole and is fixedly connected with the drive plate.

According to some embodiments of the present disclosure, the device for measuring a pressure on an electrode core when loaded into a casing further includes a first reinforcing plate. The first reinforcing plate is fixedly connected with the first pushing mechanism. The first reinforcing plate is fixedly connected with the mounting plate.

According to some embodiments of the present disclosure, the device for measuring a pressure on an electrode core when loaded into a casing further includes a second pushing mechanism. The second pushing mechanism is arranged on a side of the gripping mechanism facing away from a movement direction of the first pushing mechanism and is located above the first pushing mechanism. The second pushing mechanism is configured to move in the first direction and push the electrode core into the casing.

According to some embodiments of the present disclosure, the second pushing mechanism includes a second driving member and an ejection member. The ejection member is connected with the second driving member. The second driving member is configured to drive the ejection member to move. The ejection member selectively abuts against the electrode core and is configured to push the electrode core into the casing.

According to some embodiments of the present disclosure, two ejection members are arranged. The two ejection members are symmetrically designed. The two ejection members abut against left and right sides of a spacer of the electrode core.

According to some embodiments of the present disclosure, the second pushing mechanism further includes a second reinforcing plate. The second reinforcing plate is fixed above the ejection member.

According to some embodiments of the present disclosure, two grippers are arranged. The two grippers are oppositely arranged. The first driving member is drive-connected with the two grippers. The first driving member drives the two grippers to sandwich the electrode core.

An apparatus for loading an electrode core into a casing in an embodiment of a second aspect of the present disclosure includes the device for measuring a pressure on an electrode core when loaded into a casing in any embodiment of the first aspect of the present disclosure.

Part of additional aspects and advantages of the present disclosure is provided in the following description. The part becomes apparent from the following description, or is learned by practice of the present disclosure.

### BRIEF DESCRIPTION OF THE DRAWINGS

The above and/or additional aspects and advantages of the present disclosure become apparent and comprehensible from description of embodiments made with reference to the following drawings.
FIG. 1 is a schematic diagram of a device for measuring a pressure on an electrode core when loaded into a casing according to an embodiment of the present disclosure;
FIG. 2 is a partial schematic diagram of the device for measuring a pressure on an electrode core when loaded into a casing according to an embodiment of the present disclosure;
FIG. 3 is a partial exploded view of the device for measuring a pressure on an electrode core when loaded into a casing according to an embodiment of the present disclosure;
FIG. 4 is a partial schematic diagram of an electrode core during pushing into a casing according to an embodiment of the present disclosure; and
FIG. 5 is a schematic block diagram of an apparatus for loading an electrode core into a casing according to an embodiment of the present disclosure.

In the drawings:
100. Device for measuring a pressure on an electrode core when loaded into a casing; 1000. Apparatus for loading an electrode core into a casing; 1. Casing; 2. Through hole;
10. Gripping mechanism; 11. First driving member; 12. Gripper;
20. First pushing mechanism;
30. Second pushing mechanism; 31. Second driving member; 32. Ejection member;
40. Pressure measurement mechanism; 41. Body; 42. Measurement terminal;
50. Mounting plate;
60. Drive plate;
70. First reinforcing plate;
80. Second reinforcing plate;
90. Electrode core.

### DETAILED DESCRIPTION

Embodiments of the present disclosure are described in detail below, and the embodiments described with reference to drawings are exemplary.

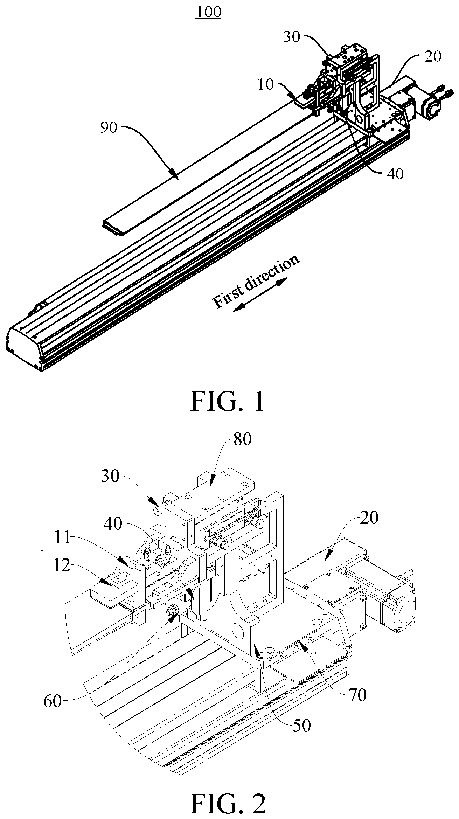

A device 100 for measuring a pressure on an electrode core when loaded into a casing in an embodiment of the present disclosure is described below with reference to FIG. 1 to FIG. 4. In addition, the present disclosure further provides an apparatus for loading an electrode core into a casing. The apparatus for loading an electrode core into a casing includes the above device 100 for measuring a pressure on an electrode core when loaded into a casing.

With reference to FIG. 1 to FIG. 4, the device 100 for measuring a pressure on an electrode core when loaded into a casing includes a gripping mechanism 10, a first pushing mechanism 20, and a pressure measurement mechanism 40. The gripping mechanism 10 includes a first driving member 11 and a gripper 12. The first driving member 11 is drive-connected with the gripper 12. The first driving member 11 is configured to drive the gripper 12 to grip an electrode core 90. Specifically, the gripping mechanism 10 includes the first driving member 11 and the gripper 12. The first driving member 11 drive-connected with the gripper 12. The first driving member 11 can drive the gripper 12 to clamp the electrode core 90 to stably grip the electrode core 90, so as to facilitate subsequent loading of the electrode core 90 into the casing, thereby ensuring power for and precision of initial loading of the electrode core 90 into the casing.

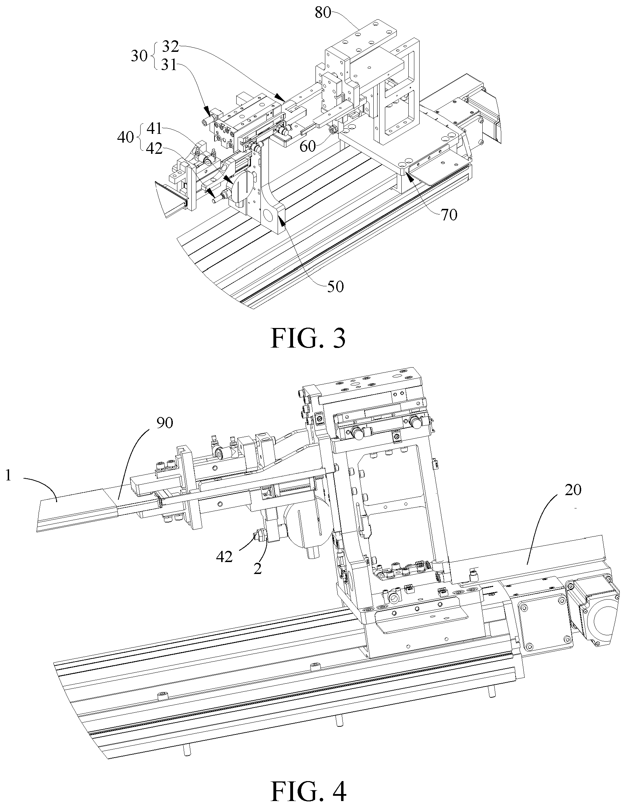

As shown in FIG. 1 and FIG. 4, the first pushing mechanism 20 is arranged below the gripping mechanism 10. The first pushing mechanism 20 is configured to move in a first direction and push the electrode core 90 into a casing 1. Specifically, the first pushing mechanism 20 is located below the gripping mechanism 10. The first pushing mechanism 20 may move in the first direction. The first direction is an axial direction of the electrode core 90. The first pushing mechanism 20 may push the electrode core 90 into the casing 1 in the first direction, so that the electrode core 90 can be smoothly loaded into the casing.

As shown in FIG. 1, FIG. 2, and FIG. 4, the pressure measurement mechanism 40 is connected with the gripping mechanism 10, and is configured to measure a resistance to the electrode core 90 during the pushing into the casing 1. Specifically, the pressure measurement mechanism 40 is connected with the gripping mechanism 10. The pressure measurement mechanism 40 may measure the resistance to the electrode core 90 during the pushing into the casing. During the loading of the electrode core 90 into the casing, the pressure measurement mechanism 40 monitors the loading of the electrode core 90 into the casing. Once a sudden increase in the force is detected, the first pushing mechanism 20 is controlled to stop operation. In this case, a worker determines damage conditions of the electrode core 90 and an insulating film, to reduce losses.

During the loading of the electrode core 90 into the casing, the pressure measurement mechanism 40 may detect a change in the resistance to the electrode core 90 in real time, and may connect to an external controller to output a detection result. The detection result is displayed on an external display. If an anomaly is detected in the resistance to the electrode core 90 during the loading into the casing, the controller controls the first pushing mechanism 20 to be stopped. The electrode core 90 is taken out for inspection and maintenance, to prevent further damage to the electrode core 90 during the loading into the casing. In this way, quality of the electrode core 90 during the loading into the casing can be monitored, which avoids a reject rate of the loading of the electrode core 90 into the casing to a large extent. The electrode core 90 after maintenance may be re-loaded into the casing, which reduces costs. The resistance to the electrode core 90 during the loading into the casing may be a resistance to a body of the electrode core 90 from the casing 1 or a scraping resistance to an insulating film outside the electrode core 90.

Therefore, the gripping mechanism 10 stably grips the electrode core 90, so that the electrode core 90 can be stably loaded into the casing. The pressure measurement mechanism 40 measures the force experienced by the electrode core 90, so that further damage to the electrode core 90 during the loading into the casing is prevented, and the quality of the electrode core 90 during the loading into the casing is monitored, which avoids the reject rate of the loading of the electrode core 90 into the casing to a large extent.

As shown in FIG. 2 and FIG. 3, the device 100 for measuring a pressure on an electrode core when loaded into a casing further includes a mounting plate 50. The mounting plate 50 is fixed above the first pushing mechanism 20. One end of the pressure measurement mechanism 40 is fixedly connected with the mounting plate 50. Another end thereof abuts against the gripping mechanism 10. Specifically, the device 100 for measuring a pressure on an electrode core when loaded into a casing is further provided with a mounting plate 50. The mounting plate 50 is fixed above the first pushing mechanism 20. An end of the pressure measurement mechanism 40 facing away from the electrode core 90 is fixedly connected with the mounting plate 50, to fix the pressure measurement mechanism 40 to the first pushing mechanism 20. Another end of the pressure measurement mechanism 40 abuts against the gripping mechanism 10, to monitor the resistance to the electrode core 90 during the loading into the casing.

Further, the device 100 for measuring a pressure on an electrode core when loaded into a casing further includes a drive plate 60. The drive plate 60 is sandwiched between the mounting plate 50 and the gripping mechanism 10. An end of the pressure measurement mechanism 40 abuts against the drive plate 60. Specifically, the device 100 for measuring a pressure on an electrode core when loaded into a casing is further provided with a drive plate 60. The drive plate 60 is sandwiched between the mounting plate 50 and the gripping mechanism 10. An end of the pressure measurement mechanism 40 abuts against the drive plate 60. An end of the drive plate 60 is connected with the gripping mechanism 10, to transmit a force experienced by the gripping mechanism 10 (that is, the resistance to the electrode core 90 during the loading into the casing) to the pressure measurement mechanism 40, to monitor the resistance to the electrode core 90 during the loading into the casing.

Further, the pressure measurement mechanism 40 includes a body 41 and a measurement terminal 42. The measurement terminal 42 protrudes relative to the body 41 and is movable relative to the body 41. The drive plate 60 is provided with a through hole 2. The measurement terminal 42 extends through the through hole 2 and is fixedly connected with the drive plate 60. Specifically, the pressure measurement mechanism 40 includes the body 41 and the measurement terminal 42. The measurement terminal 42 protrudes relative to an end of the body 41 facing away from the first pushing mechanism 20, and the measurement terminal 42 is movable relative to the body 41. The drive plate 60 is provided with a through hole 2. The measurement terminal 42 extends through the through hole 2 and is fixedly connected with the drive plate 60. In this way, the resistance to the electrode core 90 during the loading into the casing may be transmitted to the measurement terminal 42 through the drive plate 60, so that the pressure measurement mechanism 40 can monitor the resistance to the electrode core 90 during the loading into the casing. The pressure measurement mechanism 40 feeds back the force to an external controller, and the detection result is displayed on an external display. When an anomaly exists in the resistance to the electrode core 90 during the loading into the casing, the resistance pushes the measurement terminal 42 to move in a direction opposite to the movement direction of the electrode core 90. In this case, a pressure value between the measurement terminal 42 and the body 41 changes. When the pressure value between the measurement terminal 42 and the body 41 changes, the pressure measurement mechanism 40 determines that an anomaly exists in the detected resistance to the electrode core 90 during the loading into the casing. In this case, the first pushing mechanism 20 is stopped, and the damage situations of the electrode core 90 and the insulating film are determined, which avoids the reject rate of the loading of the electrode core 90 into the casing.

As shown in FIG. 2 and FIG. 3, the device 100 for measuring a pressure on an electrode core when loaded into a casing further includes a first reinforcing plate 70. The first reinforcing plate 70 is fixedly connected with the first pushing mechanism 20, and the first reinforcing plate 70 is fixedly connected with the mounting plate 50. Specifically, the device 100 for measuring a pressure on an electrode core when loaded into a casing is further provided with the first reinforcing plate 70. The pressure measurement mechanism 40 is fixedly connected with the mounting plate 50. The mounting plate 50 is fixedly connected with the first reinforcing plate 70. The first reinforcing plate 70 is fixed to the first pushing mechanism 20. In this way, the pressure measurement mechanism 40 is fixed to the first pushing mechanism 20 through the mounting plate 50 and the first reinforcing plate 70.

As shown in FIG. 2 and FIG. 4, the device 100 for measuring a pressure on an electrode core when loaded into a casing further includes a second pushing mechanism 30. The second pushing mechanism 30 is arranged behind the gripping mechanism 10 in the first direction, and the second pushing mechanism 30 is located above the first pushing mechanism 20. The second pushing mechanism 30 is configured to move in the first direction and push the electrode core 90 into the casing 1. Specifically, the device 100 for measuring a pressure on an electrode core when loaded into a casing is further provided with the second pushing mechanism 30. In the first direction (the first direction is the axial direction of the electrode core 90), the second pushing mechanism 30 is arranged behind the gripping mechanism 10. In an up-down direction, the second pushing mechanism 30 is located above the first pushing mechanism 20. The second pushing mechanism 30 moves in the first direction, to push the electrode core 90 into the casing 1. When a rear section of the electrode core 90 is loaded into the casing, it is difficult for the gripper 12 of the gripping mechanism 10 to grip the electrode core 90. In this case, the first pushing mechanism 20 stops the operation, and the second pushing mechanism 30 pushes the electrode core 90, so that the electrode core 90 can be smoothly loaded into the casing. That the second pushing mechanism 30 is arranged behind the gripping mechanism 10 in the first direction means that the second pushing mechanism 30 is arranged on a side of the gripping mechanism 10 facing away from the movement direction of the first pushing mechanism 20.

As shown in FIG. 3 and FIG. 4, the second pushing mechanism 30 includes a second driving member 31 and an ejection member 32. The ejection member 32 is connected (for example, drive-connected) with the second driving member 31. The second driving member 31 is configured to drive the ejection member 32 to move. The ejection member 32 selectively abuts against the electrode core 90 and is configured to push the electrode core 90 into the casing 1. Specifically, the second pushing mechanism 30 further includes the second driving member 31 and the ejection member 32. The ejection member 32 is drive-connected with the second driving member 31. The second driving member 31 drives the ejection member 32 to move in the first direction, to push the electrode core 90. During the loading of the electrode core 90 into the casing, when a front section of the electrode core 90 is loaded into the casing, the first pushing mechanism 20 operates. In this case, the second driving member 31 does not operate, and the ejection member 32 does not abut against the electrode core 90. When the rear section of the electrode core 90 is loaded into the casing, the first pushing mechanism 20 stops the operation. The second driving member 31 drives the ejection member 32 to move toward the electrode core 90 in the first direction, and the ejection member 32 abuts against a spacer of the electrode core 90 and pushes the spacer, to smoothly push the electrode core 90 into the casing 1. Two ejection members 32 are arranged. The two ejection members 32 are symmetrically designed. The two ejection members 32 abut against left and right sides of the spacer of the electrode core 90. Under the action of the ejection members 32, the electrode core 90 is smoothly loaded into the casing.

In the embodiments of the present disclosure, the electrode core is loaded into the casing in two stages. In a first stage, the electrode core 90 is gripped by the gripper 12, and during this stage of loading the electrode core 90 into the casing, a resistance to the electrode core 90 detected when the electrode core 90 is normally loaded is a friction experienced by the electrode core 90, which is a force that increases gradually. In a second stage, which is a stage in which the rear section of the electrode core 90 is loaded into the casing, the gripper 12 is released. Within a travel distance between the ejection member 32 and the spacer, the two ejection members 32 that are symmetrically designed are used to push the spacer into the casing. During the travel, a force experienced by the electrode core 90 is the same as a force during the first stage of the loading into the casing, which is a friction experienced by the electrode core 90. Under the action of the ejection member 32, the electrode core 90 is smoothly loaded into the casing.

In addition, the second pushing mechanism 30 further includes a second reinforcing plate 80. The second reinforcing plate 80 is fixed above the ejection member 32. Specifically, the second pushing mechanism 30 further includes the second reinforcing plate 80. The second reinforcing plate 80 is fixed above the ejection member 32. Under an action of the second driving member 31, the second reinforcing plate 80 and the ejection member 32 move together in the first direction, so that the electrode core 90 is smoothly loaded into the casing.

As show in FIG. 1, two grippers 12 are arranged. The two grippers 12 are oppositely arranged, and the first driving member 11 is drive-connected with the two grippers 12. The first driving member 11 drives the two grippers 12 to sandwich the electrode core 90. Specifically, the gripping mechanism 10 is provided with the two grippers 12. The two grippers 12 are arranged spaced away in an up-down direction, and the two grippers 12 are opposite to each other. The first driving member 11 is drive-connected with the two grippers 12. The first driving member 11 drives the two grippers 12 to stably grip the electrode core 90, to facilitate subsequent loading of the electrode core 90 into the casing.

In the embodiments of the present disclosure, the electrode core is loaded into the casing in two stages. The electrode core 90 is selectively sandwiched between the two grippers 12. Specifically, in the first stage, the electrode core 90 is gripped by the gripper 12. During this stage of loading the electrode core 90 into the casing, the first driving member 11 drives the two grippers 12 to sandwich the electrode core 90, and a resistance to the electrode core 90 detected when the electrode core is normally loaded into the casing is a friction experienced by the electrode core 90. In the second stage, which is a stage in which the rear section of the electrode core 90 is loaded into the casing, the gripper 12 is released. Within the travel distance between the ejection member 32 and the spacer, the two ejection members 32 that are symmetrically designed are used to push the spacer into the casing. During the travel, the force experienced by the electrode core 90 is the friction experienced by the electrode core 90. Under the action of the ejection member 32, the electrode core 90 is smoothly loaded into the casing.

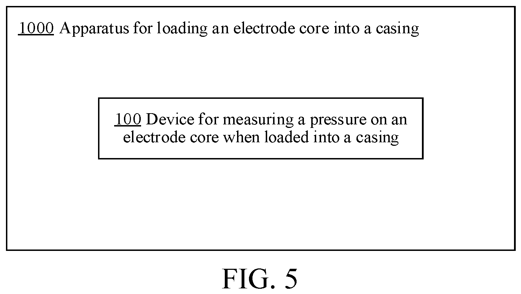

As shown in FIG. 5, an apparatus 1000 for loading an electrode core into a casing in an embodiment of a second aspect of the present disclosure includes the device 100 for measuring a pressure on an electrode core when loaded into a casing in any embodiment of the first aspect of the present disclosure.

In the description of the present disclosure, it should be understood that orientation or position relationships indicated by terms such as "center", "longitudinal", "transverse", "length", "width", "thickness", "up", "down", "front", "rear", "left", "right", "vertical", "horizontal", "top", "bottom", "inside", "outside", "clockwise", "anticlockwise", "axial direction", "radial direction", and "circumferential direction" are based on orientation or position relationships shown in the drawings, and are merely used for ease and brevity of description of the present disclosure, rather than indicating or implying that the mentioned device or element needs to have a particular orientation or be constructed and operated in a particular orientation. Therefore, such terms should not be construed as a limitation on the present disclosure.

**In** the description of this specification, descriptions provided with reference to the terms such as "an embodiment", "some embodiments", "an exemplary embodiment", "an example", "a specific example", or "some examples" mean that specific features, structures, materials, or characteristics described with reference to the embodiment or example are included in at least one embodiment or example of the present disclosure. In this specification, exemplary descriptions of the foregoing terms do not necessarily refer to the same embodiment or example.

Although the embodiments of the present disclosure are shown and described, a person of ordinary skill in the art may understand that, various changes, modifications, replacements, and variations may be made to the embodiments without departing from the principle and spirit of the present disclosure, and the scope of the present disclosure is defined by the claims and their equivalents.

## Claims

1. A device (100) for measuring a pressure on an electrode core when loaded into a casing, comprising:
a gripping mechanism (10), the gripping mechanism (10) comprising:
a first driving member (11); and
a gripper (12), the gripper (12) being drive-connected with the first driving member (11), and the first driving member (11) being configured to drive the gripper (12) to grip an electrode core (90);
a first pushing mechanism (20), the first pushing mechanism (20) being arranged below the gripping mechanism (10), and the first pushing mechanism (20) being configured to move in a first direction and push the electrode core (90) into a casing (1); and
a pressure measurement mechanism (40), the pressure measurement mechanism (40) being connected with the gripping mechanism (10) and being configured to measure a resistance to the electrode core (90) during the pushing into the casing (1).

2. The device (100) for measuring a pressure on an electrode core when loaded into a casing according to claim 1, further comprising:
a mounting plate (50), the mounting plate (50) being fixed above the first pushing mechanism (20), one end of the pressure measurement mechanism (40) being fixedly connected with the mounting plate (50), and another other end thereof abutting against the gripping mechanism (10).

3. The device (100) for measuring a pressure on an electrode core when loaded into a casing according to claim 2, further comprising:
a drive plate (60), the drive plate (60) being sandwiched between the mounting plate (50) and the gripping mechanism (10), and one end of the pressure measurement mechanism (40) abutting against the drive plate (60).

4. The device (100) for measuring a pressure on an electrode core when loaded into a casing according to claim 3, wherein the pressure measurement mechanism (40) comprises:
a body (41); and
a measurement terminal (42), the measurement terminal (42) protruding relative to the body (41) and being movable relative to the body (41), the drive plate (60) being provided with a through hole (2), and the measurement terminal (42) extending through the through hole (2) and being fixedly connected with the drive plate (60).

5. The device (100) for measuring a pressure on an electrode core when loaded into a casing according to any of claims 2 to 4, further comprising:
a first reinforcing plate (70), the first reinforcing plate (70) being fixedly connected with the first pushing mechanism (20), and the first reinforcing plate (70) being fixedly connected with the mounting plate (50).

6. The device (100) for measuring a pressure on an electrode core when loaded into a casing according to any of claims 1 to 5, further comprising:
a second pushing mechanism (30), the second pushing mechanism (30) being arranged on a side of the gripping mechanism (10) facing away from a movement direction of the first pushing mechanism (20) and being located above the first pushing mechanism (20), and the second pushing mechanism (30) being configured to move in the first direction and push the electrode core (90) into the casing (1).

7. The device (100) for measuring a pressure on an electrode core when loaded into a casing according to claim 6, wherein the second pushing mechanism (30) comprises:
a second driving member (31); and
an ejection member (32), the ejection member (32) being connected with the second driving member (31), the second driving member (31) being configured to drive the ejection member (32) to move, and the ejection member (32) selectively abutting against the electrode core (90) and being configured to push the electrode core (90) into the casing (1).

8. The device (100) for measuring a pressure on an electrode core when loaded into a casing according to claim 7, wherein two ejection members (32) are arranged, the two ejection members (32) being symmetrically designed, and the two ejection members (32) abutting against left and right sides of a spacer of the electrode core (90).

9. The device (100) for measuring a pressure on an electrode core when loaded into a casing according to claim 7 or 8, wherein the second pushing mechanism (30) further comprises:
a second reinforcing plate (80), the second reinforcing plate (80) being fixed above the ejection member (32).

10. The device (100) for measuring a pressure on an electrode core when loaded into a casing according to any of claims 1 to 9, wherein two grippers (12) are arranged, the two grippers (12) being oppositely arranged, the first driving member (11) being drive-connected with the two grippers (12), and the first driving member (11) driving the two grippers (12) to sandwich the electrode core (90).

11. An apparatus for loading an electrode core into a casing, comprising: the device (100) for measuring a pressure on an electrode core when loaded into a casing according to any of claims 1 to 10.
